# EUROPÄISCHE PATENTSCHRIFT

(11) **EP 1 083 137 B1**
(45) Veröffentlichungstag und Bekanntmachung des Hinweises auf die Patenterteilung: **02.05.2003**
(21) Anmeldenummer: 00113362.8
(22) Anmeldetag: 23.06.2000
(51) Int. Cl.: B65G 69/18

(54) **Vorrichtung zum Kuppeln zweier Behältnisse mit einer flexiblen Klappendichtung**
Device for coupling containers equiped with a flexible valve joint
Dispositif d'accouplement de récipients équipés d'un joint flexible

(30) Priorität: 10.09.1999 DE 29915973 U
(43) Veröffentlichungstag der Anmeldung: 14.03.2001
(73) Patentinhaber: GEA Buck Valve GmbH, 79379 Müllheim (DE)
(72) Erfinder: Martin Koch, 79395 Neuenburg (DE)
(74) Vertreter: Weber-Bruls, Dorothée, Dr.

(56) Entgegenhaltungen:
- WO-A-98/17561
- DE-C- 4 342 962
- DE-C- 19 520 409

## Beschreibung

Die Erfindung betrifft eine Vorrichtung zum Kuppeln von zwei jeweils einen Rohrstutzen mit einer schwenkbaren Schließklappe aufweisenden Behältnissen, wobei jede Schließklappe in einer Ringdichtung gelagert ist, die Schließklappen beim Annähern aneinander zuerst in einen Kammerbildungszustand und dann in einen Andockzustand bringbar und beim Entfernen voneinander vom Andockzustand über den Kammerbildungszustand voneinander trennbar sind, im Kammerbildungszustand zwischen den sich gegenüberliegenden Schließklappen samt Ringdichtungen eine Stoßkammer angeordnet ist, die mit einem Fluid flutbar ist, und im Andockzustand die Stirnseiten der Schließklappen dicht aneinander anliegen.

Solch eine Vorrichtung ist, beispielsweise, aus der DE 43 42 962 C1 bekannt. Dort wird die Stoßkammer einzig über die Ringdichtungen, die jeweils eine schräg radial nach außen ansteigende ringförmige Stirndichtfläche aufweisen, abgedichtet. Zur Verbesserung der Bildung bzw. Öffnung der Stoßkammer wird in der DE 195 20 409 C1 der Einsatz einer Dichtmanschette offenbart. Diesem Stand der Technik ist gemein, daß ein Reinigen der Schließklappen von Ablagerungen, insbesondere eines Umfüllproduktes, erzielt wird, indem eine zuverlässige Abdichtung der Stoßkammer sowohl vor dem In-Kontakt-Kommen der Schließklappen als auch vorzugsweise insbesondere nach dem Aus-Kontakt-Kommen der Schließklappen, also nach dem Umfüllvorgang, gegen Atmosphäre gewährleistet ist. Hierdurch lassen sich beispielsweise abgelagerte Partikel unter Vermeidung jedweder Umweltverschmutzung wieder in ihren Produktstrom zurückführen.

Aufgabe der Erfindung ist es nunmehr, die gattungsgemäße Vorrichtung derart weiterzuentwickeln, daß die Menge an Restkontaminationen auf den Klappentelleraußenseiten bzw. Schließklappenstimseiten weiter minimiert wird.

Diese Aufgabe wird erfindungsgemäß dadurch gelöst, daß sich von zumindest einer Schließklappenstirnseite mindestens eine weitere, flexible Dichtung abhebt, die im Kammerbildungszustand einen mittigen Zwischenraum zwischen den Stirnseiten der Schließklappen gegen die Stoßkammer abdichtet.

Dabei ist bevorzugt vorgesehen, daß die Stoßkammer gegen Atmosphäre über die Ringdichtungen, einen Vorsprung an einem der beiden Rohrstutzen und/oder eine Dichtmanschette abdichtbar ist.

Weiterentwicklungen der Erfindung können dadurch gekennzeichnet sein, daß die Stoßkammer und/oder die mindestens eine weitere, flexible Dichtung im wesentlichen ringförmig ist bzw. sind.

Ferner wird erfindungsgemäß vorgeschlagen, daß die Stoßkammer sich im wesentlichen im Bereich der Ringdichtungen erstreckt.

Eine Ausführungsform der Erfindung ist dadurch gekennzeichnet, daß in die Stoßkammer eine Blaseinrichtung zum Beaufschlagen derselben mit Reinigungs- und/oder Schutzgas, vorzugsweise mit zwei Austrittsöffnungen zum Bilden zweier tangential-halbkreisförmig verlaufenden Strömungen, und eine Absaugeinrichtung münden.

Bevorzugt ist erfindungsgemäß eine Weiterentwicklung, bei der ein Blasauslaß von dem Zwischenraum zu der Stoßkammer vorgesehen ist.

Schließlich wird erfindungsgemäß auch vorgeschlagen, daß die Blaseinrichtung und die Absaugeinrichtung an im wesentlichen diametral gegenüberliegenden Umfangspositionen eines der beiden Rohrstutzen angeordnet sind, wobei die Blaseinrichtung vorzugsweise zumindest teilweise durch eine Zentrierbohrung eines der beiden Rohrstutzen gebildet ist.

Der Erfindung liegt somit die überraschende Erkenntnis zugrunde, daß eine an einer Schließklappenstimseite befindliche, flexible Dichtung im Andockzustand der Schließklappen dieselben gegeneinander abdichtet und im Kammerbildungszustand noch stets an der gegenüberliegenden Schließklappenstimseite dicht anliegt, so daß die Schließklappenstirnseiten weiterhin abgedichtet sind, genauer gesagt ein gegenüber der Stoßkammer abgedichteter Zwischenraum zwischen den Schließklappenstirnseiten entsteht. Dies führt insbesondere zu den folgenden beiden Vorteilen:
Zum einen können durch eine Abreinigung im Kammerbildungszustand eventuell aufgewirbelte Stäube nicht auf die Schließklappenaußenseiten bzw. -stirnseiten gelangen.
Zum anderen wird der Absaugquerschnitt für ein Reinigungsgas, Schutzgas und/oder dergleichen samt zu entfernenden Partikeln verkleinert, so daß der Volumenstrom zur Absaugung erhöht wird und eine stärkere Absaugleistung vorliegt.

Auch kann erfindungsgemäß vorgesehen sein, daß während der Abreinigung durch einen Blasauslaß von zwischen den Schließklappenstimseiten im Bereich des abgedichteten Zwischenraums zu der Stoßkammer ein schwacher Volumenstrom aus dem abgeschlossenen Zwischenraum in die darum verlaufende Stoßkammer fließt, damit ein unkontrolliertes Eindringen von aus der Stoßkammer abzugsaugendem Material in den sauberzuhaltenden Zwischenraum vermieden wird.

Weitere Merkmale und Vorteile der Erfindung ergeben sich aus der nachstehenden Beschreibung, in der eine Ausführungsform der Erfindung beispielhaft anhand von schematischen Zeichnungen im einzelnen erläutert ist. Dabei zeigt:
- Figur 1: einen Schnitt durch die Längsmittelachse von zwei zu kuppelnden Rohrstutzen in einem noch nicht gekuppelten Funktionszustand;
- Figur 2: eine Draufsicht auf eine Schließklappe einer erfindungsgemäßen Vorrichtung, von der anderen Schließklappe her gesehen;
- Figur 3a: einen Schnitt längs der Linie A-A von Figur 2 in einem Andockzustand; und
- Figur 3b: eine Ansicht wie Figur 3a, jedoch im Kammerbildungszustand.

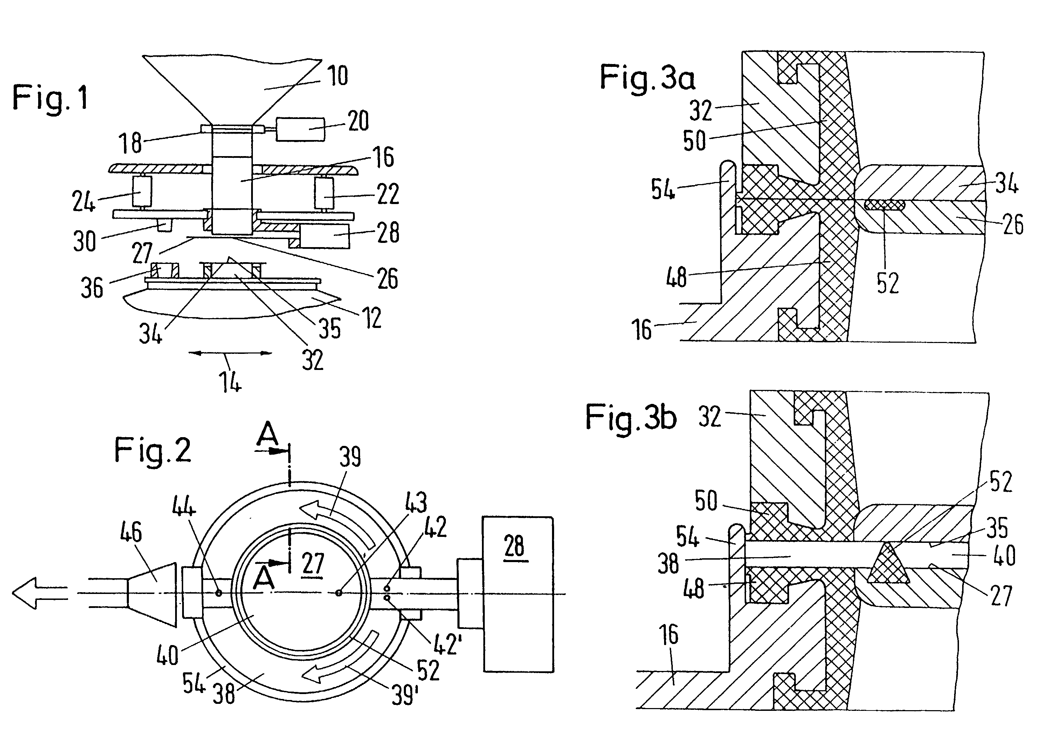

In Figur 1 sind zwei Behältnisse 10, 12 dargestellt, die zum Überführen eines (Umfüll)Produktes, aus dem einen Behältnis 10 in das andere Behältnis 12 miteinander gekuppelt werden können. Das Behältnis 10 ist dabei ein feststehender Container, während das Behältnis 12 ein in Richtung der Pfeile 14 von der Seite her unter das Behältnis 10 fahrbarer Transportbehälter ist. Das Behältnis 10 weist an seinem Auslaßende einen Rohrstutzen 16 auf, der gegenüber dem eigentlichen Volumen des Behältnisses 10 durch eine Sperreinrichtung 18, welche mittels eines Sperrantriebs 20 geöffnet und geschlossen werden kann, in Verbindung steht. Ebenso weist das Behältnis 12 an seinem Einlaßende einen Rohrstutzen 32 auf. Durch Pneumatikzylinder 22, 24 ist der Rohrstutzen 16 des feststehenden Behältnisses 10 in seiner Höhe verstellbar, um die Stirnseiten 27, 29 von Schließklappen 26, 34 der beiden Rohrstutzen 16, 32 aufeinander zu bzw. voneinander weg zu bewegen. Die Schließklappe 26 des feststehenden Behältnisses 10 kann mittels eines Schwenkantriebs 28 aus der in Figur 1 dargestellten Schließstellung unter Verschwenkung um eine in Durchmesserrichtung bezüglich des Rohrstutzens 16 liegende Schwenkachse in ihre nicht dargestellte Öffnungsstellung gebracht werden. Wenn die beiden Schließklappen 26, 34 aneinander angedockt sind, also im in Figur 1 nicht dargestellten gekuppelten Funktionszustand, kann die verschwenkbare Schließklappe 26 des feststehenden Behältnisses 10 die Schließklappe 34 des verfahrbaren Behältnisses 12 mit in eine Öffnungsstellung verschwenken. Ferner ist zum Erleichtern des Andockens des Behältnisses 12 an das Behältnis 10 eine Zentriereinrichtung vorgesehen, bestehend aus einem Zentrierstift 30 an dem ersten Rohrstutzen 16 und einer entsprechenden Zentrierbohrung 36 an dem zweiten Rohrstutzen 32.

Wie Figur 2 zu entnehmen ist, sind auf der Seite des feststehenden Behältnisses 10 nicht nur die Pneumatikzylinder 22, 24 sowie der Schwenkantrieb 28 zum Ausfahren oder Einfahren des Rohrstutzens 16 bzw. Öffnen oder Schließen der Schließklappen 26, 34 vorgesehen, sondern auch eine Blaseinrichtung, die in Austrittsöffnungen 42, 42' mündet, sowie eine Absaugeinrichtung 46, die in Wirkverbindung mit einer Öffnung 44 steht. Über die Blaseinrichtung mit den Austrittsöffnungen 42, 42' kann beispielsweise ein Reinigungsgas in Form von zwei im wesentlichen halbkreisförmigen Strömungen 39, 39' zu der Öffnung 44 der Absaugeinrichtung 48 strömen.

In den Figuren 3a und 3b ist dargestellt, wie die Strömungen 39, 39' auf eine im wesentlichen ringförmige Stoßkammer 38 zum Abreinigen von Umfüllpartikeln begrenzt wird. Zu diesem Zweck ist nämlich jede Schließklappe 26, 34 in einer Ringdichtung 48, 50 gelagert, an die auch der jeweiligen Rohrstutzen 16, 32 angreifen, wobei der Rohrstutzen 16 des feststehenden Behältnisses 10 zudem mit einem Vorsprung 54 versehen ist, und hebt sich weiterhin von der Schließklappenstimseite 27 des feststehenden Behältnisses 10 eine weitere, ringförmige, flexible Dichtung 52 ab. Werden also die Schließklappen 26, 32 aus dem in Figur 1 dargestellten, nicht gekuppelten Funktionszustand aufeinanderzugefahren, durch Herausfahren des Rohrstutzens 16, um den in Figur 3a dargestellten Andockzustand zu erreichen, in dem die Stirnflächen 27, 29 der Schließklappen 26, 32 aufeinander liegen, die Schließklappen 26, 32 über die Dichtung 52 gegeneinander und über die Rindichtungen 48, 50 sowie den Vorsprung 54 gegenüber der Atmosphäre abgedichtet sind, durchfährt die Vorrichtung auch den in Figur 3b gezeigten Kammerbildungszustand. In diesem Kammerbildungszustand liegt die sich von der Stirnseite 27 auf der Seite des feststehenden Behältnisses 10 abhebende Dichtung 52 an der gegenüberliegenden Stirnseite 29 auf der Seite des vorfahrbaren Behältnisses 12 an, so daß zwischen den Schließklappen 26, 32 ein Zwischenraum 40 entsteht, der gegenüber der Stoßkammer 38, die sich zeitgleich zwischen der Dichtung 52, den Ringdichtungen 48, 50 und dem Vorsprung 54 bildet, abgedichtet ist. Die so nach zwei Seiten abgedichtete, im wesentlichen ringförmige Stoßkammer 38 kann also mit Reinigungsgas zur Abreinigung geflutet werden, ohne daß jedoch der Zwischenraum 40 kontaminiert wird, da die Strömungen 39, 39' auf den im wesentlichen ringförmigen Bereich der Stoßkammer 38 beschränkt sind.

Damit beim Absaugen der Strömungen 39, 39' über die Öffnung 44 kein Material in den Zwischenraum 40 eindringt, ist ein Blasauslaß 43 in dem Zwischenraum 40 angeordnet, über den ein schwacher Volumenstrom aus dem Zwischenraum 40 in die Stoßkammer 38 absaugbar ist.

Die erfindungsgemäße Vorrichtung ermöglicht somit erstmals durch die flexible Dichtung 52, daß die Schließklappenstimseiten 27, 29 auch während eines Abreinigungsvorgangs abgedichtet bleiben, wodurch ein Kontaminieren dieser Stirnseiten vermieden wird. Außerdem sorgt die Verkleinerung des Absaugquerschnitts durch Beschränkung auf eine im wesentlichen ringförmige Stoßkammer 48 für eine erhöhte Absaugleistung.

## Patentansprüche

1. Vorrichtung zum Kuppeln von zwei jeweils einen Rohrstutzen (16, 32) mit einer schwenkbaren Schließklappe (26, 34) aufweisenden Behältnissen (10, 12), wobei jede Schließklappe (26, 34) in einer Ringdichtung (48, 50) gelagert ist,
die Schließklappen (26, 34) beim Annähern aneinander zuerst in einen Kammerbildungszustand und dann in einen Andockzustand bringbar und beim Entfernen voneinander vom Andockzustand über den Kammerbildungszustand voneinander trennbar sind,
im Kammerbildungszustand zwischen den sich gegenüberliegenden Schließklappen (26, 34) samt Ringdichtungen (48, 50) eine Stoßkammer (38) angeordnet ist, die mit einem Fluid flutbar ist, und
im Andockzustand die Stirnseiten (27, 35) der Schließklappen (26, 34) dicht aneinander anliegen,
**dadurch gekennzeichnet, daß**
sich von zumindest einer Schließklappenstirnseite (27) mindestens eine weitere, flexible Dichtung (52) abhebt, die im Kammerbildungszustand einen mittigen Zwischenraum (40) zwischen den Stirnseiten (27, 35) der Schließklappen (26, 34) gegen die Stoßkammer (38) abdichtet.

2. Vorrichtung nach Anspruch 1, **dadurch gekennzeichnet, daß**
die Stoßkammer (38) gegen Atmosphäre über die Ringdichtungen (48, 50), einen Vorsprung (54) an zumindest einem der beiden Rohrstutzen (16) und/oder eine Dichtmanschette abdichtbar ist.

3. Vorrichtung nach Anspruch 1 oder 2, **dadurch gekennzeichnet, daß**
die Stoßkammer (38) und/oder die mindestens eine weitere, flexible Dichtung (52) im wesentlichen ringförmig ist bzw. sind.

4. Vorrichtung nach einem der vorangehenden Ansprüche, **dadurch gekennzeichnet, daß**
die Stoßkammer (38) sich im wesentlichen im Bereich der Ringdichtungen (48, 50) erstreckt.

5. Vorrichtung nach einem der vorangehenden Ansprüche, **dadurch gekennzeichnet, daß**
in die Stoßkammer (38) eine Blaseinrichtung zum Beaufschlagen derselben mit Reinigungs- und/oder Schutzgas, vorzugsweise mit zwei Austrittsöffnungen (42, 42') zum Bilden zweier tangential-halbkreisförmig verlaufenden Strömungen (39, 39'), und eine Absaugeinrichtung (46) münden.

6. Vorrichtung nach einem der vorangehenden Ansprüche, **gekennzeichnet durch**
einen Blasauslaß (43) von dem Zwischenraum (40) zu der Stoßkammer (38).

7. Vorrichtung nach Anspruch 5 oder 6, **dadurch gekennzeichnet, daß**
die Blaseinrichtung und die Absaugeinrichtung (46) an im wesentlichen diametral gegenüberliegenden Umfangspositionen eines der beiden Rohrstutzen (16) angeordnet sind, wobei die Blaseinrichtung vorzugsweise zumindest teilweise durch eine Zentrierbohrung eines der beiden Rohrstutzen gebildet ist.

## Claims

1. Apparatus for coupling two containers (10, 12), each having a spigot (16, 32) with a pivotable closure flap (26, 34), each closure flap (26, 34) being mounted in an annular seal (48, 50), the closure flaps (26, 34) on approaching one another are adapted to be brought first into a chamber formation state and then into a docking state and on removal from one another are separable from one another from the docking state through the chamber formation state, a junction chamber (38) adapted to be flooded with a fluid is disposed in the chamber formation state between the opposite closure flaps (26, 34) and annular seals (48, 50), and
in the docking state the endfaces (27, 35) of the closure flaps (26, 34) adjoin one another in sealing-tight relationship,
**characterised in that**
at least one other flexible seal (52) rises from at least one closure flap endface (27) and in the chamber formation state seals off from the junction chamber (38) a central intermediate space (40) between the endfaces (27, 35) of the closure flaps (26, 34).

2. Apparatus according to claim 1, **characterised in that** the junction chamber (38) is adapted to be sealed off from atmosphere via the annular seals (48, 50), a projection (54) on at least one of the two spigots (16), and/or a sealing collar.

3. Apparatus according to claim 1 or 2, **characterised in that** the junction chamber (38) and/or the at least one other flexible seal (52) is/are substantially annular.

4. Apparatus according to any one of the preceding claims, **characterised in that** the junction chamber (38) extends substantially in the region of the annular seals (48, 50).

5. Apparatus according to any one of the preceding claims, **characterised in that** there lead into the junction chamber (38) a blower device for subjecting the same to cleaning and/or protective gas, preferably with two exit openings (42, 42') to form two tangentially semi-circularly extending flows (39, 39'), and a suction extraction device (46).

6. Apparatus according to any one of the preceding claims, **characterised by** a blast outlet (43) from the intermediate space (40) to the junction chamber (38).

7. Apparatus according to claim 5 or 6, **characterised in that** the blower device and the suction extraction device (46) are disposed at substantially diametrically opposite peripheral positions of one of the two spigots (16), the blower device being formed preferably at least partially by a centring borehole in one of the two spigots.

## Revendications

1. Dispositif pour coupler deux récipients comportant chacun une tubulure (16, 32) avec chacune un clapet de fermeture (26, 34) capable de pivoter ; dans lequel chaque clapet de fermeture (26, 34) est disposé dans un élément d'étanchéité annulaire (48, 50), les clapets de fermeture (26, 34) - lorsqu'ils sont rapprochés l'un de l'autre - sont d'abord amenés dans une position où ils forment une chambre et puis dans une position d'amarrage et ensuite - lorsqu'ils sont éloignés l'un de l'autre depuis la position d'amarrage - ils passent par la position où ils forment une chambre ; dans lequel, dans la position où ils forment une chambre, les clapets de fermeture (26, 34) se faisant face forment ensemble avec les éléments d'étanchéité annulaires (48, 50) une chambre périphérique (38), qui peut être balayée par un fluide ;
et dans lequel, dans la position d'amarrage, les côtés frontaux (27, 35) des clapets de fermeture (26, 34) se superposent de manière étanche,
**caractérisé en ce que**
au moins un élément d'étanchéité flexible additionnel (52) fait saillie depuis au moins un côté frontal (27) d'un clapet de fermeture et, dans la position de formation d'une chambre, isole de manière étanche par rapport à la chambre périphérique (38), une chambre intermédiaire centrale (40) entre les côtés frontaux (27, 35) des clapets de fermeture (26, 34).

2. Dispositif selon la revendication 1, **caractérisé en ce que**
la chambre périphérique (38) peut être isolée par rapport à l'atmosphère par des éléments d'étanchéité annulaires (48, 50), par une saillie (54) sur au moins une des deux tubulures(16) et / ou par une garniture cylindrique.

3. Dispositif selon la revendication 1 ou la revendication 2, **caractérisé en ce que** la chambre périphérique (38) ou / et un élément ou des éléments d'étanchéité additionnels flexibles (52) a / ont une forme sensiblement annulaire.

4. Dispositif selon l'une des revendications précédentes, **caractérisé en ce que** la chambre périphérique (38) se trouve sensiblement dans la région des éléments d'étanchéité annulaires (48, 50).

5. Dispositif selon l'une des revendications précédentes, **caractérisé en ce que** un dispositif de soufflante débouche dans la chambre périphérique (38), permettant de balayer celle-ci par un gaz de nettoyage et / ou par un gaz de protection et ayant, de préférence deux ouvertures de sortie (42, 42') pour former deux flux (39, 39') tangentiels et semi-circulaires et **en ce qu'**un dispositif d'aspiration (46) s'ouvre sur la chambre périphérique.

6. Dispositif selon l'une des revendications précédentes, **caractérisé par** un flux circulant depuis une sortie (43) de la chambre intermédiaire (40), vers la chambre périphérique (38).

7. Dispositif selon la revendication 5 ou la revendication 6, **caractérisé en ce que** le dispositif de soufflante et le dispositif d'aspiration (46) se trouvent dans des positions sensiblement diamétralement opposées sur la périphérie d'une des deux tubulures (16), le dispositif de soufflante étant constitué, de préférence et au moins partiellement, par un alésage de centrage de l'une des deux tubulures.
